(19) Europäisches Patentamt
European Patent Office
Office européen des brevets

(11) **EP 2 457 878 B1**

(12) **EUROPEAN PATENT SPECIFICATION**

(45) Date of publication and mention
of the grant of the patent:
**02.08.2017 Bulletin 2017/31**

(51) Int Cl.:
***C02F 3/28*** *(2006.01)*   ***C02F 11/04*** *(2006.01)*

(21) Application number: **11190681.4**

(22) Date of filing: **25.11.2011**

(54) **ANAEROBIC SLUDGE TREATMENT PROCESSES**

ANAEROBE SCHLAMMBEHANDLUNGSVERFAHREN

PROCÉDÉS DE TRAITEMENT DE BOUE ANAÉROBIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.11.2010 NO 20101667**

(43) Date of publication of application:
**30.05.2012 Bulletin 2012/22**

(73) Proprietor: **YARA International ASA
0213 Oslo (NO)**

(72) Inventors:
• **Granli, Tom
  3173 Vear (NO)**
• **Bakke, Rune
  3178 Skien (NO)**
• **Franke, Wolfram
  3912 Porsgrunn (NO)**
• **Samarakoon, Gamunu L.
  3915 Porsgrunn (NO)**

(74) Representative: **Onsagers AS
Munkedamsveien 35
P.O. Box 1813 Vika
0123 Oslo (NO)**

(56) References cited:
**US-A- 1 997 252    US-A1- 2010 021 979**

• **SPONZA D T ET AL: "Influence of nitrate and COD on phosphorus, nitrogen and dinitrotoluene (DNT) removals under batch anaerobic and anoxic conditions", ANAEROBE, LONDON, GB, vol. 10, no. 5, 1 October 2004 (2004-10-01), pages 287-293, XP004562859, ISSN: 1075-9964, DOI: 10.1016/J.ANAEROBE.2004.06.002**
• **SINGH S ET AL: "Effect of cupric nitrate on acceleration of biogas production", ENERGY CONVERSION AND MANAGEMENT, ELSEVIER SCIENCE PUBLISHERS, OXFORD, GB, vol. 37, no. 4, 1 April 1996 (1996-04-01), pages 417-419, XP004039802, ISSN: 0196-8904, DOI: 10.1016/0196-8904(95)00191-3**
• **GHANIYARI-BENIS S ET AL: "Effect of adding nitrate on the performance of a multistage biofilter used for anaerobic treatment of high-strength wastewater", CHEMICAL ENGINEERING JOURNAL, ELSEVIER SEQUOIA, LAUSANNE, CH, vol. 156, no. 2, 15 January 2010 (2010-01-15), pages 250-256, XP026827892, ISSN: 1385-8947 [retrieved on 2009-11-08]**
• **WANG L ET AL: "Anaerobic digested dairy manure as a nutrient supplement for cultivation of oil-rich green microalgae Chlorella sp", BIORESOURCE TECHNOLOGY, ELSEVIER BV, GB, vol. 101, no. 8, 1 April 2010 (2010-04-01) , pages 2623-2628, XP026833834, ISSN: 0960-8524 [retrieved on 2009-11-24]**
• **AMON ET AL: "Biogas production from maize and dairy cattle manure-Influence of biomass composition on the methane yield", AGRICULTURE, ECOSYSTEMS AND ENVIRONMENT, ELSEVIER, AMSTERDAM, NL, vol. 118, no. 1-4, 22 November 2006 (2006-11-22), pages 173-182, XP005774999, ISSN: 0167-8809, DOI: 10.1016/J.AGEE.2006.05.007**

EP 2 457 878 B1

## Description

The present invention relates to an anaerobic digestion process. More particularly, the present invention relates to the use of nitrate for stimulation of anaerobic digestion of organic matter, such as sludge from wastewater, resulting in increased methane production.

## Background of the invention

The amount of wet organic wastes, such as food waste, sewage sludge and wastewater from industry, agriculture and municipal origin is increasing. Livestock production in Europe and in developed countries in general is intensifying, resulting in a larger amount of animal waste. If not handled properly, the increasing amounts of animal waste may become a threat against human and animal health and food. Therefore suitable and efficient solutions to handle the rising amounts are desirable.

Degradation and removal of organic matter through mineralization is a major purpose for waste water and sludge treatment, and a preferred solution is the conversion of the waste organics to renewable energy as methane.

Anaerobic processes are commonly used to treat wastes with high concentrations of organic compounds. Instead of transforming ingredients to water ($H_2O$) and carbon dioxide ($CO_2$), which is the aim of aerobic treatment processes, an anaerobic process delivers $H_2O$, $CO_2$ and methane ($CH_4$).

In contrast to an aerobic degradation process, less energy is required in the process as no oxygen/air has to be injected. In addition, the $CH_4$ can subsequently be used as a renewable energy source, i.e. by the conversion to thermal or electrical energy.

Anaerobic treatment plants are common within larger waste water or sludge treatment plants, where they are used to transform biologically active surplus sludge into stabilized sludge, which can be used as fertilizer/soil conditioner, dumped in a landfill or burned. Anaerobic treatment plants have also become very common in agriculture, where they are primarily used to produce energy from biomass and manure. Whereas treated sludge from agricultural biogas plants may always be used as fertilizer this use is more limited for municipal sludge due to contaminations.

With both anaerobic and aerobic degradation processes it is desirable that the mass of treated sludge is as low as possible due to transportation costs afterwards.

Furthermore, 20 % of European energy demand is to be fulfilled by renewable energy systems by 2010 (Nielsen et al., 2009, "The future of anaerobic digestion and biogas utilization", Bioresource Technology, 100, pp. 5478-5484). Biogas production in the European Union has been steadily increasing over the last few years and its production was 69 TW in 2007 (Petersson and Wellinger, 2009, Biogas upgrading technologies- development and innovations, www.iea-biogas.net). More than 1500 millions tons of animal manure is produced every year in EU 27 alone (Nielsen et al., 2009, *supra*). In addition to biogasification as a renewable energy source, it reduces the release of methane to the atmosphere compared to traditional waste management (composting, land filling) and gives a high quality digestion product as a fertilizer.

Conventional anaerobic treatment of waste water and sewage involves three basic steps: 1) hydrolysis, 2) fermentation, and 3) methanogenesis. The hydrolysis step involves more than the standard chemistry understanding of hydrolysis as it also includes disintegration and the enzyme-mediated transformation of particulate material - such as lipids, polysaccharides, protein, nucleic acids, fats, etc. into soluble organic materials such as fatty acid, monosaccharides, amino acids, simple aromatics and other simple monomers. These can be used by bacteria during the subsequent fermentation processes. The fermentation step can also be referred to as acidogenesis, as this step results in further degradation of soluble organic materials mainly to acetate, hydrogen, $CO_2$, propionate and butyrate. The propionate and butyrate are further converted to acetate, hydrogen and $CO_2$. In the methanogenesis step, acetate, $H_2$ and $CO_2$ are converted into methane and carbon dioxide by methanogenic archea. Methane is produced by two main groups of archea; acetate utilizers and hydrogen-utilizing methanogens.

Anaerobic processes are classically driven without the injection of an electron source like oxygen or nitrate. Completely anaerobic conditions in anaerobic digestion are furthermore difficult to maintain due to limited and unintentional aeration effects caused during feeding, effluent and gas removal, mixing etc. (Botheju et al., 2009, "Oxygen effects in anaerobic digestion", Modeling, Identification and Control, 30(1), pp. 1-11). It is found that anaerobic microorganisms, such as methanogens survive in such environments (Kato et al. 1997, "Anaerobe tolerance to oxygen and the potentials of anaerobic and aerobic co-cultures for wastewater treatment", Brazilian journal of chemical engineering, Vol. 14 No. 4). Furthermore, it has been reported that micro aeration promotes hydrolysis (Hao et al. 2009, "Regulating the hydrolysis of organic waste by micro-aeration and effluent recirculation". Waste Management, Vol.29, pp.2042-2050, Bakke, 2006, (Johansen J.-E. and Bakke R. 2006. Enhancing hydrolysis with microaeration. Wat. Sci. Tech. 53, No. 8: 43-50), Nguyen et al., 2007, "Anaerobic digestion of municipal solid waste as a treatment prior to land fill", Bioresource Technology, Vol. 98, pp. 380-387).

Rathnasiri (2009) has in the doctoral thesis "Aanaerobic digestion process using membrane integrated micro aeration", Norwegian University of Natural Science and Technology, found that the injection of small amounts of oxygen leads to an increased methane production and also reduced COD (Chemical Oxygen Demand) levels at the same input feeds. However, the application of oxygen in an anaerobic digestion process system is associated with several drawbacks. It is not easily handled as it demands diffusion through a submerged membrane as gas should not bubble out and get into the gas collector area. Furthermore, the addition of oxygen to anaerobic digestion process systems is connected with an undesirable risk of affecting the headspace of the reactor, due to the possibilities that the oxygen may form explosive mixtures with the $CH_4$.

Due to the drawbacks in using oxygen addition, it is an object of the present invention to provide an improved anaerobic sludge treatment process for the production of methane, resulting in increased methane yield and not having the drawbacks of the use of oxygen addition as mentioned above. The present inventors thus aimed at finding an alternative compound that would have the same effect on methane production as oxygen, i.e. being an electron acceptor in an anaerobic digestion process.

Nitrate may function as an electron acceptor. The use of nitrate in anaerobic environment, such as with anaerobic digestion processes in sludge and waste water treatment plants to control hydrogen sulphide gas ($H_2S$) production, is well known (Jenneman et al., 1986, Applied and Environmental Microbiology, vol. 51, No. 6, pp. 1205-1211, Bentzen et al., 1995, Controlled dosing of nitrate for prevention of H2S in a sewer network and the effects on the subsequent treatment processes. Water Science and Technology, 31(7), pp.293-302; Zhang et al., 2008, Chemical and biological technologies for hydrogen sulphide emission control in sewer systems: A review. Water Research, 42(1-2), pp. 1-11).

Calcium nitrate addition to anaerobic processes in biogas plants with agricultural backgrounds is further described in the PCT patent application WO 2008/090231 A2. In said patent application, a calcium nitrate solution is used to minimize $H_2S$ production, an unwanted side-product of anaerobic processes.

Calcium nitrate as an addition to anaerobic digestion processes aiming at reducing sulphide production is furthermore described in the US patent 4,505,819, wherein a method using a moving solid bed reactor is disclosed.

In US patent 7,326,340, systems and methods are disclosed involving addition of nitrate to reduce the production of foul-smelling sulfide products.

In US patent 7,285,207, a method to reduce hydrogen sulphide is disclose involving the addition of nitrate and an alkaline compound.

As to other effects of nitrate in sludge treatment processes, it is reported that the addition of nitrate may have a disadvantageous effect on methane production. For example, it has been reported that methane producing bacteria are inhibited by nitrate addition (Allison and Macfarlane, 1998, "Effect of nitrate on methane production and fermentation by slurries of human faecal bacteria", J. Gen. Microbiol. 134, 1397-1405, Klüber and Conrad 1998, "Inhibitory effects of nitrate, nitrite, NO and N2O on methanogenesis by Methanosarcina barkeri and Methanobacterium bryantii", FEMS Microbiology Ecology 25:331-339, Mohanakrishnan et al (2008), Nitrate effectively inhibits sulfide and methane production in a laboratory scale sewer reactor. Water Research, 42, pp. 3961-3971). This is further in accordance with the report of Bolag and Czlonkowski (1973) (Inhibition of methane formation in soil by various nitrogen-containing compounds. Soil Biology and Biochemistry. 5 (5), pp.673-678) which found that the evolution of methane from soil samples under anaerobic conditions was suppressed by adding nitrogen containing chemicals.

Another negative impact of nitrate addition in anaerobic digester is consumption of organic carbon for denitrification as shown in the equation

$$24NO_3^- + 5C_6H_{12}O_6 \rightarrow 12N_2 + 30CO_2 + 18H_2O + 24OH^-$$

(Kim et al., 2006, *supra*, Benis et al., 2010, "Effect of adding nitrate on the performance of a multistage biofilter used for anaerobic treatment of high strength waste water", Chemical Engineering Journal, 156, pp. 250-256). The conversion of organic carbon according to the above equation results in a lower yield of methane and thus less energy recovery.

Others have suggested that the main mechanism involved in the suppression of $CH_4$ production by nitrate is the inhibition of methanogenesis by denitrification intermediates rather than the competition between denitrifiers and methanogens for substrates (Roy and Conrad, 1999, "Effect of methanogenic precursors (acetate, hydrogen, propionate) on the suppression of methane production by nitrate in anoxic rice field soil", FEMS Microbiology Ecology, Vol.28, No.1, pp.49-61).

Singh and Singh (1996), Energy Convers. Mgmt, 37:4, pp 417-419 relates to the addition of cupric nitrate to cow dung in an attempt to accelerate biogas production. The amount of cupric nitrate added to the one kg cow dung (i.e. 1 g /kg cow dung) in the report of Singh and Singh, *supra*, represents a significantly lower amount of nitrate compared with the amounts of nitrate to be added according to the present invention. In addition, the use of cupric nitrate in large scale sludge treatment processes represents a disadvantage due to e.g. environmental considerations.

The biochemical processes of an anaerobic digestion process and the various factors effecting e.g. the production of decay product such as methane and $H_2S$ gas is complex. The many reports referred to above show that all in all, the prior art teaches that the addition of nitrate to anaerobic digestion processes generally results in reduction of methane production.

The present inventors have surprisingly discovered that the addition of small amounts of inorganic nitrate to an anaerobic sludge treatment process in fact facilitates methane production, resulting in an increase in the production of methane. The present invention therefore provides an improved anaerobic digestion process resulting in high methane yield by adding inorganic nitrate to the anaerobic sludge or waste water treatment plant.

**Summary of the invention**

Due to the increasing amounts of waste water and sludge world wide, and due to the need of renewable energy sources, there is a need for more efficient processes for digestion of organic material compared with the prior art processes, resulting in higher methane production yields.

The present invention provides an anaerobic sludge treatment process, wherein inorganic nitrate solution having a nitrate concentration according to the present invention is added to stimulate methane production. A solution of inorganic nitrate applied as a liquid will have positive effects similar to that of micro-aeration but not the drawbacks of oxygen addition. Hence, according to the present invention, the inorganic nitrate is used as an electron acceptor. Like oxygen the nitrate can be used especially to enhance the degradation of not so easily accessible organic matter, and generally enhance the initial degradation steps of anaerobic digestion.

According to the invention, an anaerobic sludge treatment process for increasing the production of methane, is characterized in that nitrate salt is added to an anaerobic digestion process in an amount corresponding to 1- 4 % of the added COD.

According to one embodiment of the invention, the anaerobic sludge treatment system is selected from the group consisting of a municipal sludge treatment plant, an agricultural biogas plant and industrial anaerobic sludge digestion plant.

According to yet another embodiment of the invention, the nitrate salt of the nitrate salt solution is selected from the group consisting of sodium nitrate, potassium nitrate, calcium nitrate or magnesium nitrate.

According to a further preferred embodiment of the invention, the nitrate salt added to said anaerobic digestion process is calcium nitrate.

Said nitrate salt may according to one embodiment be added as a nitrate salt containing 10-60 weight-% of said dissolved nitrate salts.

According to the invention, a process is provided comprising the steps of a) introducing sludge or waste water into an anaerobic biological sludge or waste water treatment system; b) measuring the COD level of the sludge or waste water material at a monitoring point of the sludge or waste water treatment system; c) calculation of the nitrate dosage to be added; and d) adding nitrate in an amount corresponding to 1- 4 % of feed COD wherein the dosage of nitrate is calculated for the equation: $q(NO3)[kg/h]=Q(input\ flow)[m3/h] \times COD\ [kg/m3] \times 1,55 \times \mu$, wherein $\mu$ is a value between 0.01 and 0.04. According to yet another embodiment of the present process, the nitrate added to the process of the invention is not cupric nitrate.

Yet another embodiment of the process according to the present invention provides for the adding of nitrate at the beginning of each batch of sludge treatment.

According to another embodiment of the process according to the present invention the sludge treatment process is continuously working and the addition of nitrate is dosed periodically.

The present invention further relates to the use of inorganic nitrate to increase methane production in anaerobic sludge or waste water treatment processes using an inorganic nitrate solution as an additive to the said process. According to this aspect of the present invention, the amount inorganic nitrate added according to one embodiment of the invention equals 1 % - 4 % of COD.

According to yet another embodiment of the use according to the present invention, the nitrogen solution is added periodically or continuously during the anaerobic sludge treatment process in the reactor.

According to another embodiment of the present use, the nitrogen solution is added to the first reactor(s) or stage(s) of a dual or multi stage anaerobic digestion process.

**Brief description of the drawings**

A specific embodiment of the invention will now be described by way of example with reference to the accompanying diagrams in which:

**Figure 1** shows cumulative biogas production obtained in example 1.

**Figure 2** shows remaining total COD (TCOD) measured in the end of the experiment reported in example 1.

**Figure 3** shows remaining soluble COD (SCOD) measured in the end of the experiment reported in example 1.

**Figure 4** is a schematic diagram of batch reactor used in example 1

## Definitions

As used herein, "sludge" or "waste water" means sludge or waste water from municipal sewage disposal plants, manure treatment systems, organics from industrial operations (such as chemical and biochemical processing), food industry, paper and pulp operations, etc. Any sludge or waste water being useful as a source for methane production in an anaerobic process may be used in the anaerobic digestion process according to the present invention.

The expressions "anaerobic digestion process system", "sludge treatment system" or "waste water treatment system", refers to any sludge or waste water collection plant and/or treatment system or facility where organic waste material present in the sludge or waste water is treated or processed to manufacture methane from the organic matter being introduced in said treatment system.

The term "feed point" as used herein refers to the point at which the inorganic nitrate is added to the sludge or waste water treatment process.

The term "monitoring point" or "test point" as used herein refers to the point of the sludge or waste water treatment system wherein data measurements are performed enabling calculations of the nitrate dosage needed to obtain optimal methane production of the treated sludge or waste water.

## Definition of Oxidation Power Demand

Oxidation Power Demand (OPD) is defined as the amount of oxidation power needed to oxidize completely one or more organic compounds in sludge, mixtures or other materials. OPD is fundamentally expressed as the amount of electrons that need to be transferred in the redox process for the complete oxidation, but more generally it can be expressed as the amount of electron acceptors needed to receive these electrons.

As an example, 180 mg/l of glucose = 1 mM would transfer 24 mM electrons to the electron acceptor for complete oxidation to $CO_2$ and $H_2O$:

$$C_6H_{12}O_6 + 24OH^- \rightarrow 6CO_2 + 18H_2O + \mathbf{24e^-} \qquad (1)$$

This half-reaction must be balanced with a half-reaction receiving these electrons, a reduction of an electron acceptor. An electron acceptor can be numerous substances, but oxygen and nitrate are relevant in this context:

$$4.8NO_3^- + \mathbf{24e^-} + 28.8H^+ \rightarrow 2.4N_2 + 14.4H_2O \qquad (2)$$

$$6O_2 + \mathbf{24e^-} + 24H^+ \rightarrow 12H_2O \qquad (3)$$

The full reaction in each case would be:

$$C_6H_{12}O_6 + 4.8NO_3^- + 4.8H^+ \rightarrow 6CO_2 + 2.4N_2 + 8.4H_2O(4) = (1)+(2)$$

$$C_6H_{12}O_6 + 6O_2 \rightarrow 6CO_2 + 6H_2O (5) = (1)+(3)$$

The OPD will in this example be expressed as:

$$4.8 \text{ mM } NO_3^- = 297.6 \text{ mg } NO3^-/l \qquad (6)$$

$$6 \text{ mM } O_2 = 192 \text{ mg } O_2/l \qquad (7)$$

When OPD is expressed as mg/l $O_2$ it is commonly referred to as Chemical Oxygen Demand (COD).

"Chemical oxygen demand (COD)" as used herein, is a unit of measure determining the capacity of water to consume oxygen upon decomposition of organic matter. The skilled person is well aware of the various methods available for the measurement of COD in samples of the sludge or waste water entering or leaving an anaerobic sludge or waste water treatment plant. Standardized laboratory assays wherein a sample is incubated with a strong chemical oxidant under specific conditions of temperature and for a particular period of time are known. For example, a commonly used oxidant available for COD assays is potassium dichromate ($K_2Cr_2O_2$) used in combination with sulfuric acid ($H_2SO_4$). One method for measuring COD is the dichromate reflux method ("Standard Methods for examination of Water and Waste water", Eaton AD, Clesceri LS, Greenberg AE, (1995), Standard Methods for the Examination of Water and Wastewater, 19th Edition, American Public Health Association, USA - Method 5220 D Chemical Oxygen Demand) providing superior oxidizing ability of most organic compounds.

The COD level measured may be used to determine the amount of nitrate to be added to facilitate methane production according to the present invention. In the present application the dosing of nitrate is thus expressed as a fraction (%) of COD of the organics in the anaerobic digestion feed.

According to the present invention, increased biogas formation is obtained when adding nitrate corresponding to 1 %- 4 % of feed COD. According to one preferred embodiment of the invention, a nitrate solution corresponding to 2 % of feed COD is added to an anaerobic sludge or waste water treatment process.

## Detailed description of the invention

According to the present invention, nitrate is added as an electron acceptor to facilitate methane production in anaerobic sludge and waste water treatment processes, thus having a similar effect to the addition of oxygen as an electron acceptor. The dosage of a nitrate solution will support the microbial activity in general. There are a number of microorganisms that are involved in the process of anaerobic digestion including acetic acid forming bacteria (acetogens) and methane forming bacteria (methanogens), resulting in that organic waste is converted to intermediate molecules including sugars, hydrogen, organic acids such as acetic acid and propionic acid, and finally to biogas. The nitrate added to the initial degradation steps leads to more biomass in forms of anoxic species that later on can be degraded anaerobically. Additionally the organic matter itself will be more easily degradable due to enhancement of these initial processes.

Anaerobic sludge and waste water treatment processes can be designed and engineered to operate using a number of different process configurations, e.g. in respect of discontinuous batch systems or continuous systems. A batch system is the simplest form of system, wherein the biomass to be digested is added to a reactor in one batch and then is sealed for the duration of the process. In continuous digestion systems, the biomass to be digested is continuously added in stages to the reactor, and the end products, i.e. biogas and other degradation products are continuously removed, resulting in continuous and relatively constant production of biogas. Both single and multiple digester reactors placed in sequence are commonly used. Examples of well known systems for continuous treatment of sludge and waste water include continuous stirred-tank reactors (CSTRs), up flow anaerobic sludge blankets (UASB), Expanded granular sludge beds (EGSB) and Internal circulation reactors (IC).

Anaerobic sludge and waster water treatment processes may also be constructed differently in respect of involving a one-stage or single stage process, or a two-stage or multi stage process. In this respect, a single step process represents a process wherein all the biological reactions happen within one single sealed reactor. A two-stage or multi stage process involves the use of more than one reactor, and wherein each reactor is optimized with respect to providing optimal conditions for the biological processes to be conducted within each reactor. For example, the first digestion processes, the hydrolysis and the acidogenesis steps, may occur in one reactor, whereas the next step, the methanogenesis, occurs in another reactor. The process according to the present invention is applicable in the various sludge and waste water treatment systems known to the skilled person for the biological production of methane, i.e. in batch and continuous processes and in single and multi stage processes.

For batch reactors, a small dosage of an inorganic nitrate, e.g. such as calcium nitrate is added at the start-up of a batch.

The present invention is applicable to all the various anaerobic sludge and waste water treatment processes discussed above.

For continuous flow working reactors a periodical or constant dosage of inorganic nitrate is used. Control of continuously working processes may demand a control system with process control parameters enabling the estimation of the nitrate dose to be added. Thus, according to the present invention, data measurements are performed during continuous flow working sludge and waste water treatment enabling the determination and addition of the nitrate needed.

Independent of the type of sludge or waste water process used, the nitrate dosage to be added may be estimated as outlined below.

The nitrate to be added may be estimated from the Oxidation Power Demand (OPD) from various methods for determination of the oxidizable organic carbon content of the sludge or waste water to be treated. Three optional methods are e.g.:

### 1) OPD from COD

The nitrate dose recommendation can be made with reference to the OPD. A conversion factor is needed to calculate the COD from the OPD. From (6) and (7) above, the skilled person will acknowledge that the ratio between COD level (or OPD expressed in mg $O_2$/l) and OPD expressed in mg $NO_3^-$/l is 1.55.

In a system with a feed COD value of 50 000 mg $O_2$/l, a dosage (of nitrate) of 2 % OPD would mean (50 000 x 1.55 x 0.02) = 1 550 mg $NO_3^-$/l. Using a 50 % Calcium nitrate solution as the product to be added to a sludge treatment process, this would give a dosing rate of 2344 mg product/l (i.e. 1550*124/164/0.5).

Thus, in accordance with the explanation above, there is a fairly straightforward way of determine the nitrate dose (in % OPD) from information/measurements of COD.

<u>2) OPD from TOC/DOC</u>

When the COD information is not available, OPD can be estimated from other expressions/determinations of oxidizable organic carbon, also known as the parameter total organic carbon (TOC). If the compounds are dissolved this equals the DOC. If the content of TOC is expressed as content of carbon, e.g. dissolved organic carbon (DOC) one must assume what type of carbon compound it is (the oxidation state of the carbon).

<u>3) OPD from carbon compounds in headspace</u>

If COD, TOC or DOC of the feed cannot be measured, then an estimation of feed COD can be made via biogas production, from production rates and concentrations of $CH_4$ and $CO_2$ in the headspace of the reactor. The produced biogas is carbon transferred from dissolved and solid organic matter. Hence there is a relation between biogas production and organic carbon content of digester input and output.

**Dosage calculations**

According to one embodiment of the invention, the dosage of nitrate to be added to facilitate methane production is estimated based on the COD of the sludge or waste water, i.e. the COD load. Without being bound by any theory, the nitrate will provide a sufficient amount of electrons to stimulate the anaerobic processes without disturbing them.

As mentioned above, the present inventors have surprisingly discovered that the feeding of an equivalent of 1 % to 4 % of the COD as nitrate into a sludge treatment reactor, the methane production is facilitated resulting in a significant increase of the methane production compared with a process where no nitrate is added.

The process according to the present invention should be stabilized and monitored by using $CH_4$ and $CO_2$ measurement for a feedback control and continuous COD estimation. Biogas production rate and $CH_4$ and $CO_2$ measurements in the headspace and discharge/off-gas of reactors are standard parameters measured by equipment on biogas production plants and well known to the skilled person.

According to one embodiment of the present invention, COD is measured analytically or derived from carbon related parameters, as shown above. The calculation of the dosage of nitrate refers to the average COD of the system input as well as the input flow Q (input).

The dosage is then calculated by the equation:

$$q(NO_3) \, [kg/h] = Q \, (input)[m^3/h] * COD \, [kg/m^3] * 1.55 * \mu$$

wherein $\mu$ is a value between 0.01 and 0.04, i.e. the amount of nitrate corresponding to 1 % - 4 % of feed COD.

As an example, the dosage of nitrate to be added, i.e. $q(NO_3)$ is 0.31 [kg/h] when Q (input) = 1 [m$^3$/h], COD = [20 kg/m3], $\mu$ = 0.01. If the nitrate is applied as $Ca(NO_3)_2$ in a 45 % aqueous solution this results in $q(Ca(NO_3)_2)$= 0.41 [kg/h]. The mass specific dosage is 310 ppm for $NO_3$ and 409 ppm for $Ca(NO_3)_2$, respectively. Similar calculations may be performed for the various numbers within the desired range according to the invention, i.e. wherein $\mu$ is a value between 0.01 and 0.04.

For calculating the dosage a self learning computer program may be used. This dynamically calculated dosage amount may be applied with a dosage pump connected to the computer unit. This unit may also be used to monitor temperature, $CO_2$ and $CH_4$ levels as these parameters are also standard data which are monitored.

From waste water treatment it is known that sodium nitrate works similarly to calcium nitrate when it comes to support biological degradation processes in sewers. Hence an increased methane yield will be provided not only with calcium nitrate but with any inorganic nitrate. A non-limited list of inorganic nitrate that may be used according to the present invention is sodium nitrate, potassium nitrate, calcium nitrate, magnesium nitrate. It is also possible to use nitric acid ($HNO_3$).

According to one embodiment of the invention, the nitrate to be added is not cupric nitrate, because copper as a heavy metal shall not be added to potential fertilizers.

The following examples serve to explain the invention in more detailed only, and shall not be construed limiting for the scope of the claimed invention.

Example 1:

Batch reactors in lab scale.

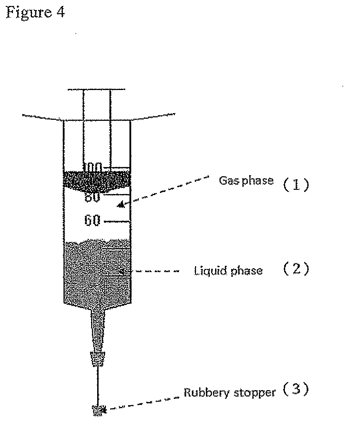

Twelve batch reactors consisting of syringes were used as lab scale batch reactors (figure 4). Each syringe was connected to a needle blocked by a small rubbery stopper (3) to stop leakage of both gas (1) and liquid (2). The syringes were kept in an incubator at a temperature of 35 ± 1.0°C.

39 ml of inoculums consisting of an initial inoculum taken from a municipal waste water sludge continuous flow anaerobic digestion treatment plant (Porsgrunn municipality, Norway) and nutrient solution containing starch, peptone, yeast extract, $KH_2PO_4$ and $K_2HPO_4$, and tap water were feed into each batch reactor. Calcium nitrate solution was added in the beginning of the test. Two parallel groups were set. Ten of the reactors were added calcium nitrate solutions corresponding to different percentage of $O_2$ as follows: 0 %, 2 %, 4 %, 8 % and 16 % (as percentages of feed COD load). Two reactors were kept without feeding and the other 10 were fed a 1ml starch solution having 54468 mg/l COD.

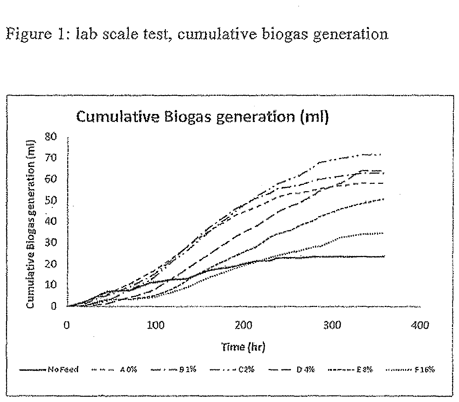

Biogas generation was measured for all the reactors at various times as shown in figure 1. The composition of gas collected was analysed using Hewlett Packard, HP, Micro Gas Chromatograph (GC) Aglient model P200 following the instructions of the manufacturer. The data handling and instrument control software used was MTI EZChrom 200 version 4.5 data handling and instrument control software.

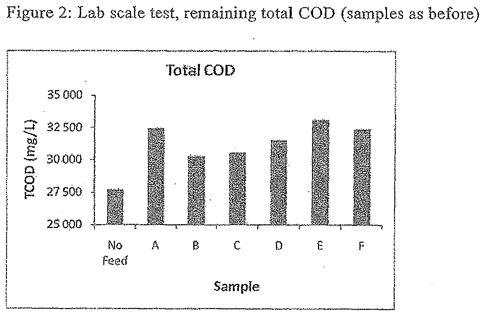

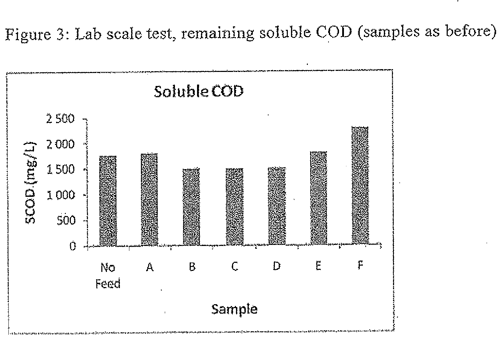

In addition, total COD (TCOD) and soluble COD (SCOD) were tested according to the methods described below and are shown in figures 2 and 3. The COD measurement was determined based on the COD measurement procedure Closed Reflux, Colorimetric COD Method according to the method disclosed in "Standard Methods for examination of Water and Waste water", Eaton AD, Clesceri LS, Greenberg AE, (1995), Standard Methods for the Examination of Water and Wastewater, 19th Edition, American Public Health Association, USA - Method 5220 D Chemical Oxygen Demand.

Figure 1 shows how cumulative biogas production varies at different nitrate levels applied to laboratory scale batch reactors. The result demonstrates that reactors fed with1688 mg/L concentration of nitrate (equal to 2 % oxygen of feed COD) showed the highest biogas generation compared with the other laboratory scale reactors. The results further show that the biogas formation increases with increasing amounts of nitrate up to a level corresponding to 2 % oxygen. The results further show that the biogas formation is higher compared with the reactor not having any added nitrate, i.e. corresponding to strictly anaerobic conditions, until the amount of oxygenation equivalent nitrate exceeds about 4 %.

Figure 2 and 3 shows SCOD and TCOD, respectively, at the end of the experiment (358 hr) for the different nitrate levels tested. At nitrate solutions added equal to 1 %, 2 % and 4 % oxygenation, respectively, both SCOD and TCOD are lower compared with the reactor having no nitrate solution added or having even higher amounts of nitrate solution added (i.e. equal to 8 % and 16 % oxygenation).

The results thus show that by adding nitrate solution to an anaerobic sludge treatment reactor, wherein the amount of nitrate equals from 1 % to 4 % oxygenation, higher methane production and lower COD are obtained. The most optimal conditions are obtained wherein the nitrogen solution added equals 2 % oxygenation.

**Claims**

1. A process for increasing the production of methane in an anaerobic sludge treatment process, **characterized in that** the method comprises the following steps:

    a) introducing sludge into an anaerobic biological sludge or waste water treatment system;
    b) measuring the COD level of the sludge material at a monitoring point of the sludge or waste water treatment system;
    c) calculating the nitrate dosage to be added;
    d) adding nitrate as a nitrate salt solution based on the calculations in step c) in an amount corresponding to 1- 4 % of the COD of the organics in the anaerobic digestion feed; and wherein the dosage of nitrate is calculated from the equation:

$$q(NO_3) \, [kg/h] = Q \, (\text{input flow})[m^3/h] * COD \, [kg/m^3] * 1.55 * \mu$$

    wherein $\mu$ is a value between 0.01 and 0.04.

2. The process according to claim 1, **characterized in that** the anaerobic sludge treatment process is selected from the group consisting of a municipal sludge treatment plant, an agricultural biogas plant and an industrial anaerobic sludge digestion plant.

3. The process according either of the preceding claims, **characterized in that** the nitrate salt of the nitrate salt solution is selected from the group consisting of sodium nitrate, potassium nitrate, calcium nitrate or magnesium nitrate.

4. The process according to claim 3, wherein the nitrate salt is calcium nitrate.

5. The process according to claim 4, **characterized in that** the nitrate salt solution contains 10-60 weight-% of dissolved nitrate salt.

6. The process according to claim 1, characterized that the nitrate is not cupric nitrate.

7. The process according to any of the claims 1-6, wherein nitrate is added at the beginning of each batch of sludge treatment.

8. The process according to any of the claims 1-6, wherein the sludge treatment process is working continuously and wherein the addition of nitrate is dosed periodically.

9. The process according to any of the claims 1-8 , wherein the nitrate salt solution is added to the first reactor(s) or stage(s) of a dual or multi stage anaerobic digestion process.

10. The use of nitrate to increase methane production in anaerobic sludge treatment processes according to claim 1 using a nitrate salt solution as an additive to said process.

11. The use according to claim 10, wherein the amount nitrate added equals 1 % - 4 % of COD.

12. The use according to claim 10, wherein the nitrate salt solution is added periodically or continuously during the anaerobic sludge treatment process in the reactor.

13. The use according to claim 10, wherein the nitrate salt solution is added to the first reactor(s) or stage(s) of a dual or multi stage anaerobic digestion process.

**Patentansprüche**

1. Verfahren zur Erhöhung der Produktion von Methan bei einem anaeroben Schlammbehandlungsverfahren, **dadurch gekennzeichnet, dass** das Verfahren die folgenden Schritte umfasst:

a) zuführen von Schlamm in ein anaerobes biologisches Schlamm- oder Abwasserbehandlungssystem;
b) messen des CSB-Werts des Schlammmaterials an einem Überwachungspunkt des Schlamm- oder Abwasserbehandlungssystems;
c) berechnen der zuzusetzenden Nitratdosis;
d) zusetzen von Nitrat als Nitratsalzlösung auf Basis der Berechnungen von Schritt c) in einer Menge, die 1 bis 4 % des CSB der organischen Substanzen in dem Zustrom zum anaeroben Abbau entspricht;

und wobei die Nitratdosis mittels folgender Gleichung berechnet wird:

$$q(NO_3)[kg/h] = Q(Eingangsstrom)[m^3/h] * CSB[kg/m^3] * 1,55 * \mu,$$

wobei $\mu$ ein Wert zwischen 0,01 und 0,04 ist.

2. Verfahren nach Anspruch 1, **dadurch gekennzeichnet, dass** das anaerobe Schlammbehandlungsverfahren aus der Gruppe ausgewählt ist, die aus einer kommunalen Schlammbehandlungsanlage, einer landwirtschaftlichen Biogasanlage und einer industriellen anaeroben Schlammabbauanlage besteht.

**3.** Verfahren nach einem der vorhergehenden Ansprüche, **dadurch gekennzeichnet, dass** das Nitratsalz der Nitratsalzlösung aus der Gruppe ausgewählt ist, die aus Natriumnitrat, Kaliumnitrat, Calciumnitrat oder Magnesiumnitrat besteht.

**4.** Verfahren nach Anspruch 3, wobei das Nitratsalz Calciumnitrat ist.

**5.** Verfahren nach Anspruch 4, **dadurch gekennzeichnet, dass** die Nitratsalzlösung 10 bis 60 Gew.-% gelöstes Nitratsalz enthält.

**6.** Verfahren nach Anspruch 1, **dadurch gekennzeichnet, dass** das Nitrat nicht Kupfernitrat ist.

**7.** Verfahren nach einem der Ansprüche 1 bis 6, wobei Nitrat am Beginn jeder Schlammbehandlungscharge zugesetzt wird.

**8.** Verfahren nach einem der Ansprüche 1 bis 6, wobei das Schlammbehandlungsverfahren kontinuierlich erfolgt und wobei der Nitratzusatz periodisch dosiert wird.

**9.** Verfahren nach einem der Ansprüche 1 bis 8, wobei die Nitratsalzlösung dem (den) ersten Reaktor(en) oder der (den) ersten Stufe(n) eines zwei- oder mehrstufigen anaeroben Abbauverfahrens zugesetzt wird.

**10.** Verwendung von Nitrat zur Erhöhung der Methanproduktion bei anaeroben Schlammbehandlungsverfahren nach Anspruch 1, wobei eine Nitratsalzlösung als Zusatz bei dem Verfahren verwendet wird.

**11.** Verwendung nach Anspruch 10, wobei die zugesetzte Nitratmenge gleich 1 % bis 4 % des CSB ist.

**12.** Verwendung nach Anspruch 10, wobei die Nitratsalzlösung während des anaeroben Schlammbehandlungsverfahrens in dem Reaktor periodisch oder kontinuierlich zugesetzt wird.

**13.** Verwendung nach Anspruch 10, wobei die Nitratsalzlösung dem (den) ersten Reaktor(en) oder der (den) ersten Stufe(n) eines zwei- oder mehrstufigen anaeroben Abbauverfahrens zugesetzt wird.


**Revendications**

**1.** Procédé pour augmenter la production de méthane dans un procédé de traitement anaérobie de boue, **caractérisé en ce que** le procédé comprend les étapes suivantes :

a) introduction d'une boue dans un système de traitement anaérobie de boue biologique ou d'eau résiduaire ;
b) mesure du degré de DCO de la matière de boue à un point de contrôle du système de traitement de boue ou d'eau résiduaire ;
c) calcul de la dose de nitrate devant être ajoutée ;
d) ajout de nitrate sous la forme d'une solution de sel de nitrate sur la base des calculs de l'étape c) en une quantité correspondant à 1 à 4 % de la DCO des substances organiques dans la charge de digestion anaérobie ;

et dans lequel la dose de nitrate est calculée à partir de l'équation :

$$q(NO_3)[kg/h] = Q \text{ (flux d'entrée)}[m^3/h] * DCO[kg/m^3] * 1{,}55 * \mu$$

où $\mu$ est une valeur entre 0,01 et 0,04.

**2.** Procédé selon la revendication 1, **caractérisé en ce que** le procédé de traitement anaérobie de boue est choisi dans le groupe constitué par une station municipale de traitement de boue, une installation agricole de biogaz et une installation industrielle de digestion anaérobie de boue.

**3.** Procédé selon l'une quelconque des revendications précédentes, **caractérisé en ce que** le sel de nitrate de la solution de sel de nitrate est choisi dans le groupe constitué par le nitrate de sodium, le nitrate de potassium, le nitrate de calcium ou le nitrate de magnésium.

4. Procédé selon la revendication 3, dans lequel le sel de nitrate est le nitrate de calcium.

5. Procédé selon la revendication 4, **caractérisé en ce que** la solution de sel de nitrate contient 10 à 60 % en poids de sel de nitrate dissous.

6. Procédé selon la revendication 1, **caractérisé en ce que** le nitrate n'est pas le nitrate cuprique.

7. Procédé selon l'une quelconque des revendications 1 à 6, dans lequel le nitrate est ajouté au début de chaque lot de traitement de boue.

8. Procédé selon l'une quelconque des revendications 1 à 6, dans lequel le procédé de traitement de boue fonctionne en continu et dans lequel l'addition de la dose de nitrate est effectuée périodiquement.

9. Procédé selon l'une quelconque des revendications 1 à 8, dans lequel la solution de sel de nitrate est ajoutée au(x) premier(s) réacteur(s) ou étape(s) d'un procédé de digestion anaérobie à deux étapes ou multi-étapes.

10. Utilisation de nitrate pour augmenter la production de méthane dans des procédés de traitement anaérobie de boue selon la revendication 1, en utilisant une solution de sel de nitrate en tant qu'additif audit procédé.

11. Utilisation selon la revendication 10, dans laquelle la quantité de nitrate ajoutée équivaut à 1 % à 4 % de la DCO.

12. Utilisation selon la revendication 10, dans laquelle la solution de sel de nitrate est ajoutée périodiquement ou en continu pendant le procédé de traitement anaérobie de boue dans le réacteur.

13. Utilisation selon la revendication 10, dans laquelle la solution de sel de nitrate est ajoutée au(x) premier(s) réacteur(s) ou étape(s) d'un procédé de digestion anaérobie à deux étapes ou multi-étapes.

Figure 1: lab scale test, cumulative biogas generation

Figure 2: Lab scale test, remaining total COD (samples as before)

Figure 3: Lab scale test, remaining soluble COD (samples as before)

Figure 4

Gas phase (1)

Liquid phase (2)

Rubbery stopper (3)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008090231 A2
- US 4505819 A
- US 7326340 B
- US 7285207 B

### Non-patent literature cited in the description

- **NIELSEN et al.** The future of anaerobic digestion and biogas utilization. *Bioresource Technology,* 2009, vol. 100, 5478-5484
- **PETERSSON ; WELLINGER.** *Biogas upgrading technologies- development and innovations,* 2009, www.iea-biogas.net
- **BOTHEJU et al.** Oxygen effects in anaerobic digestion. *Modeling, Identification and Control,* 2009, vol. 30 (1), 1-11
- **KATO et al.** Anaerobe tolerance to oxygen and the potentials of anaerobic and aerobic co-cultures for wastewater treatment. *Brazilian journal of chemical engineering,* 1997, vol. 14 (4
- **HAO et al.** Regulating the hydrolysis of organic waste by micro-aeration and effluent recirculation. *Waste Management,* 2009, vol. 29, 2042-2050
- **JOHANSEN J.-E. ; BAKKE R.** Enhancing hydrolysis with microaeration. *Wat. Sci. Tech.,* 2006, vol. 53 (8), 43-50
- **NGUYEN et al.** Anaerobic digestion of municipal solid waste as a treatment prior to land fill. *Bioresourse Technology,* 2007, vol. 98, 380-387
- **RATHNASIRI.** Aanaerobic digestion process using membrane integrated micro aeration. *Norwegian University of Natural Science and Technology,* 2009
- **JENNEMAN et al.** *Applied and Environmental Microbiology,* 1986, vol. 51 (6), 1205-1211
- **BENTZEN et al.** Controlled dosing of nitrate for prevention of H2S in a sewer network and the effects on the subsequent treatment processes. *Water Science and Technology,* 1995, vol. 31 (7), 293-302
- **ZHANG et al.** Chemical and biological technologies for hydrogen sulphide emission control in sewer systems: A review. *Water Research,* 2008, vol. 42 (1-2), 1-11

- **ALLISON ; MACFARLANE.** Effect of nitrate on methane production and fermentation by slurries of human faecal bacteria. *J. Gen. Microbiol.,* 1998, vol. 134, 1397-1405
- **KLÜBER ; CONRAD.** Inhibitory effects of nitrate, nitrite, NO and N2O on methanogenesis by Methanosarcina barkeri and Methanobacterium bryantii. *FEMS Microbiology Ecology,* 1998, vol. 25, 331-339
- **MOHANAKRISHNAN et al.** Nitrate effectively inhibits sulfide and methane production in a laboratory scale sewer reactor. *Water Research,* 2008, vol. 42, 3961-3971
- **BOLAG ; CZLONKOWSKI.** Inhibition of methane formation in soil by various nitrogen-containing compounds. *Soil Biology and Biochemistry,* 1973, vol. 5 (5), 673-678
- **BENIS et al.** Effect of adding nitrate on the performance of a multistage biofilter used for anaerobic treatment of high strength waste water. *Chemical Engineering Journal,* 2010, vol. 156, 250-256
- **ROY ; CONRAD.** Effect of methanogenic precursors (acetate, hydrogen, propionate) on the suppression of methane production by nitrate in anoxic rice field soil. *FEMS Microbiology Ecology,* 1999, vol. 28 (1), 49-61
- **SINGH.** *Energy Convers. Mgmt,* 1996, vol. 37 (4), 417-419
- Standard Methods for examination of Water and Waste water. **EATON AD ; CLESCERI LS ; GREENBERG AE.** Standard Methods for the Examination of Water and Wastewater. American Public Health Association, 1995